# EUROPÄISCHE PATENTANMELDUNG

(11) **EP 1 357 375 A2**
(43) Veröffentlichungstag der Anmeldung: **29.10.2003**
(21) Anmeldenummer: 03007528.7
(22) Anmeldetag: 01.04.2003
(51) Int. Cl.: G01M 11/08

(54) **Aktorik- und Sensoriksystem für Verbundstrukturen**

(30) Priorität: 04.04.2002 DE 10214984
(71) Anmelder: EADS Deutschland GmbH, 85521 Ottobrunn (DE)
(72) Erfinder: Kehlenbach, Michael, 85521 Ottobrunn (DE)

(57) **Zusammenfassung**

Die Erfindung umfasst ein Aktorik- und Sensoriksystem (1) für Verbundstrukturen insbesondere CFK-Strukturen (10) mit Piezokeramikaktoren, insbesondere zur aktiven Schwingungsdämpfung und/oder Formkontrolle sowie Faser-Bragg-Gitter-Sensoren (30) insbesondere als Dehnungsmesssensoren, wobei die Piezokeramikatoren als Piezofasermodule (20a, 20b) ausgebildet sind und die Faser-Bragg-Gitter-Sensoren (30) zumindest teilweise in die Piezofasermodule (20a, 20b) eingebettet sind.

## Beschreibung

Die Erfindung betrifft ein Aktorik- und Sensoriksystem für Verbundstrukturen, insbesondere CFK-Strukturen mit Piezokeramikaktoren, insbesondere zur aktiven Schwingungsdämpfung und/oder Formkontrolle sowie Faser-Bragg-Gitter-Sensoren, insbesondere als Dehnungsmesssensoren.

Zur Überwachung des Leistungspotentials und der Integrität von Faserverbund-Strukturen (Structural Health Monitoring) und hier insbesondere von CFK-Strukturen werden integrierte Sensoren immer wichtiger. Vor allem im Luftfahrzeugbau bieten in die CFK-Strukturen eingebettete Faser-Bragg-Gitter-Sensoren einen vielversprechenden Ansatz, sowohl die Integrität der Struktur im Betrieb zu überwachen als auch bei der Instandhaltung einen erheblichen Gewinn an Sicherheit und Zuverlässigkeit bei geringen Inspektions- und Wartungskosten zu erzielen.

Faser-Bragg-Gitter-Sensoren sind intrinsische optische Sensoren, welche unbeeinflussbar durch Radio- oder Mikrowellen sind, exzellente Multiplex-Fähigkeiten haben und eine hohe Langzeitstabilität aufweisen. Dadurch, dass Faser-Bragg-Gitter-Sensoren optische Fasern mit kleinem Durchmesser sind, können sie leicht in Verbundstrukturen integriert werden. Die Sensoren können sowohl Dehnungen und Spannungen als auch Temperaturänderungen in der Struktur messen und detektieren. Dies kann sowohl hochauflösend statisch oder mit hoher Abtastrate dynamisch geschehen. Somit lassen sich Verformungen, Beschädigungen, Vibrationen sowie elastische Wellen und Ultraschallwellen erfassen. Der Vorteil von integrierten Faser-Bragg-Gitter-Sensoren liegt in ihren geringen Anschaffungskosten, dem geringen Gewicht und der robusten Einsatzfähigkeit in Verbundstrukturen.

Ebenso können Pierzokeramikaktoren insbesondere in Verbundstrukturen als Stellglieder zur Formkontrolle oder zur aktiven Schwingungsdämpfung dienen. Hierzu werden die Piezokeramikaktoren auf die Struktur aufgeklebt oder in die Struktur einlaminiert. Durch Anlegen einer elektrischen Spannung werden diese angesteuert und führen eine der Spannung äquivalente Bewegung - meist eine Dehnung - aus. Diese kann zur Anpassung der Form verwendet werden, indem eine in der Struktur durch die Bewegung der Piezokeramikmodule entstehende Spannung in eine Stellbewegung der Struktur umgesetzt wird, um beispielsweise die Form an einen bestimmten Sollwert anzupassen. Bei einer zeitlich veränderten Ansteuerung der Piezokeramikaktoren entstehen auf diese Art und Weise Schwingungen, die unerwünschten Schwingungen in der Struktur entgegenwirken können, um diese zu dämpfen.

Als Piezokeramikaktoren werden für die oben beschriebenen Anwendungsgebiete quader- oder scheibenförmige Piezokeramikaktoren verwendet. Bei der Strukturintegrierung von quader- oder scheibenförmigen Piezokeramikaktoren wird die Struktur durch den eingebetteten Fremdkörper jedoch geschwächt. Dies geschieht hauptsächlich durch die Herumführung der einzelnen Kohlefaserlagen der Struktur um die Piezokeramikaktoren. Insbesondere bei Verbundwerkstoffen und hier vor allem bei CFK-Strukturen wird durch die quader- oder scheibenförmigen Piezokeramikaktoren der Verlauf der eingebrachten Fasern gestört. Diese verlaufen somit nicht mehr in Richtung des Kraftflusses, was zu einer Schwächung der Struktur führt. Außerdem ist an den Grenzflächen zwischen Struktur und Piezokeramikaktor die Gefahr einer Delamination der Struktur durch die Ausbildung von Harztaschen besonders groß. Eine Anbindung an die Keramik ist nur schwach gegeben und wird zudem häufig durch die ständigen Bewegungen der Piezokeramikaktoren in der Struktur beeinträchtigt, was dazu führt, dass die so entstehende Fehlstelle sich weiter durch die gesamte Struktur ausbreitet. Dies ist umso kritischer, je mehr Piezokeramikaktoren in der Struktur vorhanden sind.

Zur Strukturüberwachung mittels Faser-Bragg-Gitter-Sensoren als Dehnungsmesssystem kann die Struktur von außen mit Ultraschall zu Schwingungen angeregt werden. Dies hat den Nachteil, dass die Messtechnik nicht vollständig in die Struktur integrierbar ist, so dass eine Online-Überwachung während des Einsatzes der Struktur nicht möglich ist. Es ist aber auch bekannt, strukturintegrierte quaderoder scheibenförmige Piezokeramikaktoren zur Anregung zu benutzen. Hierzu werden elastische Wellen (z. B. Lamb-Wellen) angeregt, die sich in der Struktur ausbreiten und aufgrund ihrer Ausbreitungscharakteristik zur Beurteilung der strukturellen Integrität verwendet werden können, wenn sie von einem Sensor wie dem Faser-Bragg-Gitter-Sensor messtechnisch erfasst werden. Zur Schadensdiagnose wird dabei die Veränderung des Ausbreitungsverhaltens der elastischen Wellen vor und nach einem Schaden herangezogen. Dies hat aber neben den schon oben dargelegten Nachteilen der Integration von quader- oder scheibenförmigen Piezokeramikaktoren zusätzlich den weiteren Nachteil, dass zwar eine Überwachung und Kontrolle des Laminats durchgeführt werden kann, nicht aber der Piezokeramikaktoren selbst. Weiterhin ist die Messauflösung bei einer derartigen Anordnung sehr gering.

Die Aufgabe der vorliegenden Erfindung ist es, ein Aktorik- und Sensoriksystem bereitzustellen, welches sich vollständig in die Struktur integrieren lässt, bei dem die Gefahr von Beschädigungen, insbesondere eine Delamination der Struktur minimiert wird und bei dem zudem noch eine Überwachung der Arbeitsweise der eingebauten Aktoren möglich ist.

Zur Lösung der Aufgabe ist ein Aktorik- und Sensoriksystem der eingangs beschriebenen Art erfindungsgemäß dadurch gekennzeichnet, dass die Piezokeramikaktoren als Piezofasermodule ausgebildet sind und die Faser-Bragg-Gitter-Sensoren zumindest teilweise in die Piezofasermodule integriert sind.

Piezofasermodule unterscheiden sich von Piezokeramikaktoren dadurch, dass die aktiven Komponente nicht scheiben- oder quaderförmig sind, sondern aus faserförmigem, piezokeramischem Material bestehen. Diese werden jedoch konventionell durch Anlegen einer Spannung zu einer Dehnung bzw. Stauchung veranlasst. Um eine möglichst effiziente Energieausbeute zu haben, besteht ein Piezofasermodul dabei aus mehreren piezokeramischen Fasern, die in die Struktur eingebracht werden und zusammen verschaltet sind.

Die so als Piezofasermodul eingebrachten piezokeramischen Fasern übernehmen in der erfindungsgemäßen Ausgestaltung sowohl die Funktion der Formkontrolle und aktiven Schwingungsdämpfung als auch zur Erzeugung von Ultraschallwellen, um eine Strukturüberwachung bzw. zerstörungsfreie Prüfung der Struktur mit den eingebrachten Faser-Bragg-Gitter-Sensoren zur Dehnungsmessung zu ermöglichen. Die Faser-Bragg-Gitter-Sensoren wirken hierbei sowohl statisch als auch dynamisch, um Verformungen, Schwingungen und sich ausbreitende Ultraschallwellen zu erfassen.

Von Vorteil erweist sich bei einem solchen System, dass sich sowohl die Piezofasermodule als auch die Faser-Bragg-Gitter-Sensoren gut in den Verbundwerkstoff einbetten lassen und in der Struktur keine Störstellen darstellen, womit eine Struktur mit maximaler Funktionalität entsteht. Die Steifigkeiten und Festigkeiten der Struktur werden wesentlich geringer herabgesetzt als bei quader- oder scheibenförmigen Piezokeramikaktoren. Auch die Piezofasern selbst besitzen eine höhere Festigkeit bzw. Bruchdehnung als vergleichbare quaderförmige Elemente. Zudem lassen sich gegenüber quader- oder scheibenförmigen Piezokeramiken höhere Dehnungen erreichen, so dass die Piezofasern zudem auch leicht bei gekrümmten Oberflächen einsetzbar sind. Durch die geringe Beeinflussung der Struktur durch den Einsatz von Piezokeramikfasern weist die Struktur schließlich keine durch die Aktoren bzw. Sensoren bedingte Gefahr zur Delamination mehr auf. Außerdem ist das Zusatzgewicht durch die in die Struktur integrierten Piezofasermodule und Faser-Bragg-Gitter-Sensoren relativ gering. Demgegenüber steht ein deutliches Plus an Funktionalität, wodurch die Möglichkeit entsteht, an anderen Stellen Gewicht einzusparen. Durch die integrierte Strukturüberwachung lassen sich insbesondere beim Einsatz in Flugzeugen oder Hubschraubern die Wartungskosten verringern, da der Zustand der Struktur jederzeit evaluiert werden kann. Zudem kann durch die Einbringung der Faser-Bragg-Gitter-Sensoren in die Piezofasermodule zusätzlich zur normalen Überwachung der Verbundstruktur nicht nur das Laminat der Struktur überwacht werden, sondern auch die Piezofasern, also die Quelle der Ultraschallwellen selbst.

Wie oben erwähnt, können die Piezofasermodule aus mehreren in die Struktur eingebrachten miteinander verschalteten piezokeramischen Fasern bestehen. Vorteilhafterweise handelt es sich bei den Piezofasermodulen jedoch um in ein Polymer eingebettete im wesentlichen parallel angeordnete piezokeramische Fasern und diese kontaktierende, quer zu den piezokeramischen Fasern laufende Elektroden.

Hierdurch können die Module außerhalb der Struktur vorgefertigt und danach in die Struktur integriert werden, wodurch eine erhebliche Einsparung an Arbeitsaufwand erzielt wird. Durch die Einbettung in ein Polymer ist eine gute Anbindung an die übrige Struktur gewährleistet, ohne dass die Gefahr einer Delamination zunimmt. Außerdem ist durch die vorkonfektionierte Ausbildung eine später am Bauteil durchzuführende Kontaktierung vereinfacht.

Bevorzugt sind neben den in den Piezofasermodulen eingebrachten Faser-Bragg-Gitter-Sensoren in der Verbundstruktur noch zusätzlich weitere Sensoren eingebettet. Die Verwendung von flächig verteilten Faser-Bragg-Gitter-Sensoren bietet eine höhere Messauflösung. Schädigungen lassen sich deshalb besser lokalisieren. Dabei sind die zusätzlichen Faser-Bragg-Gitter-Sensoren insbesondere bevorzugt derart in die Struktur integriert, dass sie ein Raster ausbilden. Hierdurch lässt sich die Lokalisierung von eventuellen Schädigungen weiter verbessern.

Die Ansteuerung der Piezofasermodule zur Formkontrolle, zur aktiven Schwingungsdämpfung und zur Erzeugung von Ultraschallwellen kann auf unterschiedliche Art und Weise durchgeführt werden. Bevorzugt steuert aber ein Funktionsgenerator und ein Signalverstärker die Piezofasermodule an. Mit dem Funktionsgenerator können sowohl Ansteuerungssequenzen zur Formkontrolle bzw. Schwingungsdämpfung in Abhängigkeit der Erfordernisse als auch die Ansteuerung der Piezofasermodule zur Erzeugung von Ultraschallwellen der erforderlichen Form durchgeführt werden. Der Signalverstärker hebt das Ausgangssignal des Funktionsgenerators auf das notwendige Niveau an, ohne jedoch auf die Ansteuerungssequenz selbst direkt Einfluss zu nehmen.

Zur Steigerung der Variabilität und der Einsatzmöglichkeiten ist es weiterhin besonders vorteilhaft, den Funktionsgenerator und den Signalverstärker über einen externen Regler und einen Prozessrechner zu betreiben. Über den Prozessrechner ist es insbesondere einfacher, unterschiedliche Ansteuerungssequenzen für die Formkontrolle bzw. Schwingungsdämpfung und zur Erzeugung von Ultraschallwellen zeitlich zu koordinieren.

Zur Ansteuerung der in die Piezofasermodule eingebetteten Faser- Bragg-Gitter-Sensoren und der gegebenenfalls zusätzlich in die Struktur integrierten Faser-Bragg-Gitter-Sensoren wird vorteilhafterweise über ein Laser erzeugtes Licht über einen ersten Koppler in die Faser-Bragg-Gitter-Sensoren eingekoppelt und das reflektierte Signal über einen zweiten Koppler ausgelesen und über einen Multiplexer auf einen Prozessrechner zur Analyse gegeben. Hierbei kann es sich um denselben Prozessrechner handeln, der schon die Regelung und Ansteuerung der Piezofasermodule bewerkstelligt.

Die Erfindung wird im folgenden anhand eines in Zeichnungen dargestellten Ausführungsbeispiels näher beschrieben, aus dem sich weitere Einzelheiten, Merkmale und Vorzüge ergeben.

Es zeigen
- Fig. 1: einen prinzipiellen Aufbau eines erfindungsgemäßen Systems anhand einer Integration in ein Rotorblatt in CFK-Technologie.
- Fig. 2: eine vergrößerte Darstellung eines Piezofasermoduls mit integriertem Bragg-Faser-Gitter-Sensor.

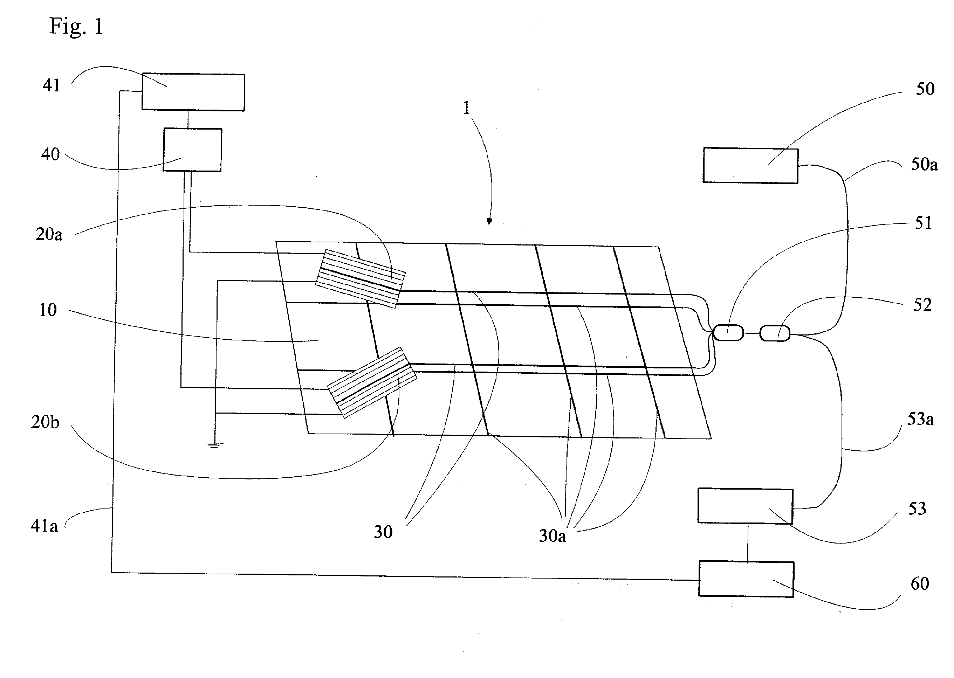

Fig. 1 zeigt das erfindungsgemäße Aktorik- und Sensoriksystem 1 in eine Struktur 10 integriert. Bei dieser Struktur 10 handelt es sich hier um ein Rotorblatt eines Hubschraubers in CFK-Technologie. Es sind jedoch auch andere Bauteile wie z. B. Flugzeugtragflächen oder ähnliches in anderen Bauweisen möglich. Zur besseren Veranschaulichung sind die in die Struktur 10 integrierten Teile hervorgehoben dargestellt.

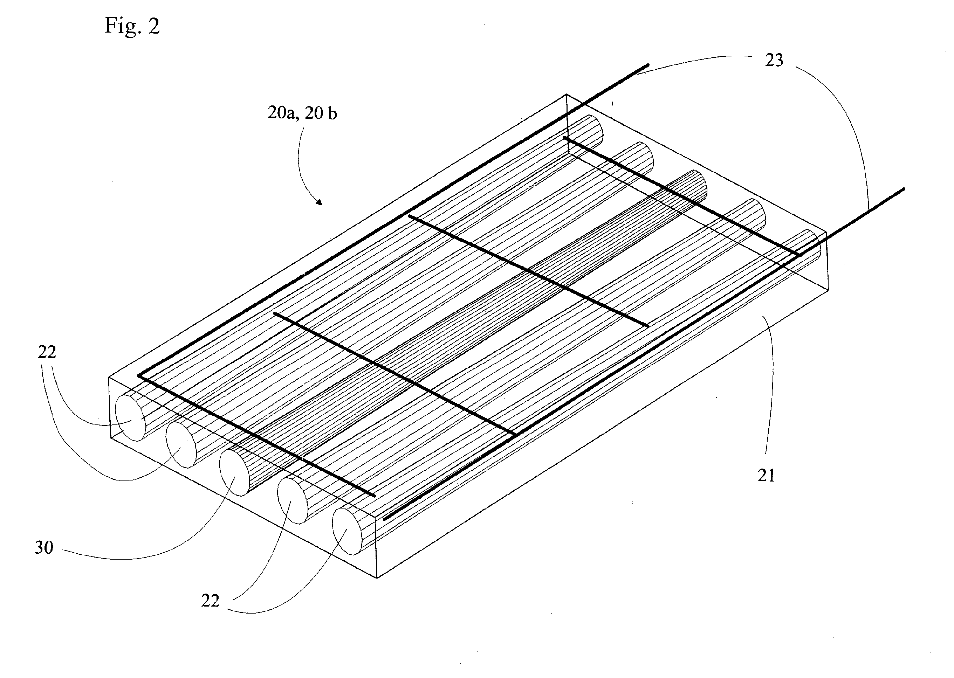

Einzelne Faser-Bragg-Gitter-Sensoren 30 erstrecken sich in die integrierten Piezofasermodule 20a, 20b hinein (näherer Aufbau der Piezofasermodule siehe Fig. 2). Zusätzlich sind in die Struktur 10 weitere Faser-Bragg-Gitter-Sensoren 30a rasterförmig über die Struktur integriert verteilt und in der Lage, in dieser Dehnungsmessungen vorzunehmen sowie die Ausbreitung von elastischen Wellen (Lambwellen) zu messen. Durch die Integration einzelner Faser-Bragg-Gitter-Sensoren 30 in die Piezofasermodule 20a, 20 b lassen sich zusätzlich die Piezofasern 22 bezüglich Schädigung und ihrer tatsächlichen Dehnung kontrollieren. Damit kann die aus einem Verbundwerkstoff und integrierten Piezofasermodulen sowie Faser-Bragg-Gitter-Sensoren bestehende Struktur als Gesamtsystem überwacht werden. Schädigungen und Ermüdungsvorgänge können sowohl im Laminat als auch in den Piezofasermodulen festgestellt werden.

Zur Ansteuerung der Piezofasermodule sind diese über einen Signalverstärker 40 mit einem Funktionsgenerator 41 verbunden, der die notwendigen Ansteuersequenzen sowohl zur Formkontrolle/Schwingungsdämpfung als auch zur Erzeugung von Ultraschallwellen mit den notwendigen Frequenzen zur Dehnungsmessung über die Faser-Bragg-Gitter-Sensoren 30, 30a erzeugt. Dabei wird der Funktionsgenerator 41 selbst über eine Datenleitung 41a durch einen Prozessrechner 60 gesteuert, der gleichzeitig auch die zu den durch die Piezofasermodule 20a, 20b erzeugten Ultraschallwellen gehörenden Ergebnisse der Dehnungsmessungen durch die Faser-Bragg-Gitter-Sensoren 30, 30a aufzeichnet.

Hierfür wird das von einem Laser 50 erzeugte Licht über eine optische Leitung 50a und einen ersten optischen Koppler 51 in die Faser-Bragg-Gitter-Sensoren 30, 30a eingespeist.

Ein schmaler Anteil des Spektrums des breitbandig eingespeisten Lichts wird von jedem Faser-Bragg-Gitter-Sensor zurückreflektiert. Die Wellenlänge des reflektierten Lichts eines jeden Sensors ist dabei proportional zu seiner Dehnung.

Die von den Faser-Bragg-Gitter-Sensoren 30, 30a reflektierten Signale werden anschließend von einem zweiten optischen Koppler 52 über eine optische Leitung 53a auf einen optischen Detektor 53 gegeben, der die Wellenlängenzuordnung vornimmt. Das Ergebnis wird schließlich zu den Signalen, die für die Piezofasermodule 20a, 20b erzeugt wurden, gegeben.

Die zeitliche Änderung der Faser-Bragg-Gitter-Sensor-Signale kann auf Basis eines Mustererkennungsprozesses zur Dateninterpretation und -analyse herangezogen werden.

Fig. 2 zeigt ein Piezofasermodul 20a, 20b in vergrößerter Darstellung. Hier sind die piezokeramischen Fasern 22 in ein Polymer 21 eingebettet. Zwischen diesen liegen die Faser-Bragg-Gitter-Sensoren 30. Zur elektrischen Kontaktierung der piezokeramischen Fasern 22 sind quer zu den Fasern Elektroden 23 derart in das Polymer eingebettet, dass sie die Fasern 22 abschnittsweise kontaktieren. Für die jeweilige Polarität führen die elektrischen Zuleitungen zu den Elektroden 23 aus dem Polymer heraus, um ein Anschluss an den Funktionsgenerator 41 und den Signalverstärker 40 vornehmen zu können. Diese Piezofasermodule 20a lassen sich leicht in Strukturen in Faserverbundbauweise 10 integrieren, da sie einen ähnlichen Aufbau wie die Struktur selbst aufweisen. Somit ist die Gefahr, Fremdkörper in die Struktur einzubringen, was zu einer Delamination der Struktur an dieser Stelle führen würde, sehr gering.

## Patentansprüche

1. Aktorik- und Sensoriksystem (1) für Verbundstrukturen, insbesondere CFK-Strukturen (10) mit Piezokeramikaktoren, insbesondere zur aktiven Schwingungsdämpfung und/oder Formkontrolle sowie Faser-Bragg-Gitter-Sensoren (30), insbesondere als Dehnungsmesssensoren, **dadurch gekennzeichnet, dass** die Piezokeramikaktoren als Piezofasermodule (20a, 20 b) ausgebildet sind und die Faser-Bragg-Gitter-Sensoren (30) zumindest teilweise in die Piezofasermodule 20a, 20b integriert sind.

2. Aktorik- und Sensoriksystem (1) nach Anspruch 1, **dadurch gekennzeichnet, dass** die Piezofasermodule (20a, 20b) in ein Polymer (21) eingebettete im wesentlichen parallel angeordnete piezokeramische Fasern (22) und diese kontaktierende, quer zu den piezokeramischen Fasern (22) verlaufende Elektroden (23) sind.

3. Aktorik- und Sensoriksystem (1) nach Anspruch 1 oder 2, **dadurch gekennzeichnet, dass** zusätzlich weitere Faser-Bragg-Gitter-Sensoren (30a) in der Verbundstruktur (10) eingebettet sind.

4. Aktorik- und Sensoriksystem (1) nach Anspruch 3, **dadurch gekennzeichnet, dass** die weiteren Faser-Bragg-Gitter-Sensoren (30a) ein Raster bildend verlegt sind.

5. Aktorik- und Sensoriksystem (1) nach einem oder mehreren der vorangegangenen Ansprüche, **dadurch gekennzeichnet, dass** ein Funktionsgenerator (41) und ein Signalverstärker (40) die Piezofasermodule (20a, 20b) ansteuern.

6. Aktorik- und Sensoriksystem (1) nach Anspruch 5, **dadurch gekennzeichnet, dass** ein Regler und ein Prozessrechner (60) den Funktionsgenerator (41) und den Signalverstärker (40) regeln.

7. Aktorik- und Sensoriksystem (1) nach einem oder mehreren der vorangegangenen Ansprüche, **dadurch gekennzeichnet, dass** die Ansteuerung der Faser-Bragg-Gitter-Sensoren (30, 30a) über einen Laser (50) sowie einen ersten Koppler (51) bewerkstelligt ist und die Sensorik durch einen zweiten Koppler (52), einen optischen Detektor (53) und einen Prozessrechner (60).
